(19) Europäisches Patentamt
European Patent Office
Office européen des brevets

(11) Veröffentlichungsnummer: **0 019 860**
**B1**

# (12) EUROPÄISCHE PATENTSCHRIFT

(45) Veröffentlichungstag der Patentschrift: **16.06.82**

(51) Int. Cl.³: **C 08 G 18/77,** B 29 J 5/00, C 08 G 18/38, C 08 G 18/76, C 08 L 97/02

(21) Anmeldenummer: **80102852.3**

(22) Anmeldetag: **22.05.80**

## (54) Wässrige Isocyanat-Emulsionen sowie deren Verwendung als Bindemittel in einem Verfahren zur Herstellung von Formkörpern.

(30) Priorität: **29.05.79 DE 2921726**

(43) Veröffentlichungstag der Anmeldung: **10.12.80 Patentblatt 80/25**

(45) Bekanntmachung des Hinweises auf die Patenterteilung: **16.06.82 Patentblatt 82/24**

(84) Benannte Vertragsstaaten: **AT BE CH DE FR GB IT LI SE**

(56) Entgegenhaltungen:
**DE-A1-2 441 843**
**DE-A1-2 610 552**
**DE-A1-2 703 271**
**DE-A1-2 711 958**

(73) Patentinhaber: **BAYER AG, Zentralbereich Patente, Marken und Lizenzen, D-5090 Leverkusen 1, Bayerwerk (DE)**

(72) Erfinder: **Scholl, Hans-Joachim, Dr., Rudolf-Sohm-Strasse 28, D-5000 Köln 60 (DE)**
Erfinder: **Reiff, Helmut, Dr., Walter Flex Strasse 16, D-5090 Leverkusen 1 (DE)**
Erfinder: **Sachs, Hanns Immo, Semmelweisstrasse 149, D-5000 Köln 80 (DE)**

**EP 0 019 860 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wässrige Isocyanat-Emulsionen sowie deren Verwendung als Bindemittel in einem Verfahren zur Herstellung von Formkörpern

Die vorliegende Erfindung betrifft neue, ein internes Formtrennmittel enthaltende wässrige Isocyanat-Emulsionen sowie deren Verwendung als Bindemittel bei der Herstellung von Formkörpern, insbesondere Platten, bevorzugt aus lignocellulosehaltigen Materialien.

Presswerkstoffe wie z.B. Spanplatten, Verbundplatten oder andere Formkörper werden gewöhnlich so hergestellt, dass man das anorganische oder organische Rohmaterial, z.B. eine Masse aus Holzschnitzeln, Holzfasern oder anderem Lignocellulose enthaltenden Material, mit Bindemitteln, z.B. wässrigen Dispersionen oder Lösungen von Harnstoff/Formaldehyd- oder Phenol/Formaldehyd-Harzen, heiss verpresst. Es ist auch bekannt, als Bindemittel für Pressplatten anstelle von Harnstoff/Formaldehyd- oder Phenol/Formaldehyd-Harzen Isocyanatlösungen zu verwenden (DE-AS 1 271 984; DE-OS 1 492 507; DE-OS 1 653 177).

Weiterhin sind Verfahren zur Herstellung von Platten oder Formgegenständen bekannt geworden, welche darin bestehen, dass eine Mischung von Lignocellulosematerial und einer wässrigen Emulsion eines organischen Polyisocyanats verpresst wird (DE-OSen 2 610 552, 2 703 271, 2 724 363, 2 724 364).

Derartige wässrige Emulsionen haben, abgesehen von ihrer unterschiedlichen Dispergierbarkeit und Reaktionsfähigkeit gegenüber Wasser, den generellen Nachteil, als Bindemittel Trennschwierigkeiten an der Grenzfläche Formkörper: Presswerkzeug zu verursachen.

Der Erfindung liegt die Aufgabe zugrunde, die oben beschriebenen Nachteile zu überwinden, und neue wässrige selbsttrennende Isocyanat-Emulsionen zur Verfügung zu stellen.

Diese Aufgabe wird mit den erfindungsgemässen Isocyanatemulsionen gelöst.

Gegenstand der vorliegenden Erfindung sind Emulsionen, enthaltend

A) 80 - 20 Gew.-%, bezogen auf gesamte Emulsion, an Wasser,

B) 18 - 79 Gew.-%, bezogen auf gesamte Emulsion, eines organischen Polyisocyanats und gegebenenfalls

C) 1 - 10 Gew.-%, bezogen auf Polyisocyanat, eines nichtionischen, oberflächenaktiven Mittels als Emulgator,

welche dadurch gekennzeichnet sind, dass sie

D) 0,5 - 5 Gew.-%, bezogen auf gesamte Emulsion, einer Sulfonsäure der allgemeinen Formel

$$R_1-(SO_3H)_n$$

enthalten, in welcher

n für die ganzen Zahlen 1 oder 2, vorzugsweise für 1 steht und

$R_1$ einen aromatischen Kohlenwasserstoffrest mit 6-14 Kohlenstoffatomen, einen aliphatischen Kohlenwasserstoffrest mit 10-18 Kohlenstoffatomen, einen cycloaliphatischen Kohlenwasserstoffrest mit 6-15 Kohlenstoffatomen, vorzugsweise jedoch einen araliphatischen Kohlenwasserstoffrest mit 7-15 Kohlenstoffatomen oder einen alkaromatischen Kohlenwasserstoffrest mit 7-24 Kohlenstoffatomen

bedeutet.

Besonders bevorzugt werden Sulfonsäuren der oben angegebenen allgemeinen Formel eingesetzt, in welchen $R_1$ für einen Alkyl-substituierten Phenylrest mit insgesamt 9-20 Kohlenstoffatomen steht. Es ist jedoch auch möglich, als Trennmittel solche Sulfonsäuren der angegebenen Formel einzusetzen, in welchen $R_1$ zusätzlich inerte Substituenten, wie z.B. Halogen- oder Nitrogruppen aufweist.

Spezifische Vertreter geeigneter Sulfonsäuren sind z.B. Decansulfonsäure, Octadecansulfonsäure, Benzolsulfonsäure, Toluolsulfonsäure, Naphthalinsulfonsäure, Cyclohexylsulfonsäure und insbesondere aromatische Monosulfonsäuren, wie sie durch Sulfonierung von Alkylbenzolen, wie Hexylbenzol, Dodecylbenzol, Octadecylbenzol oder Gemischen dieser Verbindungen in an sich bekannter Weise zugänglich sind.

Gegenstand der Erfindung ist weiterhin ein Verfahren zur Herstellung von Formkörpern durch Heissverpressen einer Masse aus einem zerkleinerten organischen und/oder anorganischen Rohstoff unter Verwendung einer wässrigen Emulsion einer Isocyanatgruppen aufweisenden Verbindung als Bindemittel, welches dadurch gekennzeichnet ist, dass als Bindemittel die erfindungsgemässen Emulsionen eingesetzt werden.

Als zur Erhöhung der Stabilität der erfindungsgemässen Emulsion gegebenenfalls in Mengen bis ca. 10 Gew.-%, bezogen auf Isocyanat, zuzusetzende Emulgatoren kommen z.B. die gemäss Stand der Technik für diesen Zweck verwendeten Verbindungen in Frage. Es sind dies z.B. die in DE-OS 2 447 135 (US-PS 3 996 154) beschriebenen Emulgatoren, insbesondere Verbindungen des Typs

$$R\text{-}O-(CH_2\text{-}CH_2\text{-}O)_n-CONHY$$

wobei

R für eine Alkylgruppe mit 1 bis 4 C-Atomen steht

n eine ganze Zahl $\geq 5$ bedeutet und

Y jenen Rest darstellt, welcher durch Entfernung einer NCO-Gruppe aus einem Polyisocyanat entsteht.

In Frage kommen auch die oberflächenaktiven Substanzen gemäss DE-PS 1 081 225 (US-PS 2 946 767). Hierbei handelt es sich um Alkoxylierungsprodukte langkettiger Monoalkohole, Monocarbonsäuren, Monoamine, Monomercaptane oder Alkylmonophenole, welche mit Polyisocyanaten umgesetzt werden.

Erfindungsgemäss bevorzugt sind jedoch neue Emulgatoren, welche in einer Parallelanmeldung der Anmelderin beansprucht werden. Diese neuen Emulgatoren entsprechen der allgemeinen Formel

$$R\text{-}X-(CH_2\text{-}CH_2\text{-}O)_n-CO\text{-}NH\text{-}Y$$

in welcher

X für eine der zweiwertigen Gruppen -O-, $\overset{R'}{\overset{|}{-N-}}$, $-CH_2O-$ oder -S- steht,

n eine Zahl zwischen 10 und 50 bedeutet,

R' einen $C_1$-$C_3$-Alkylrest,

R einen aromatischen oder cycloaliphatischen Rest mit 2 bis 9, vorzugsweise 3 bis 6 C-Atomen, welcher gegebenenfalls Sauerstoff oder Stickstoff als Heteroatom im Ring enthält, und

Y einen Rest darstellt, wie er durch Entfernung einer Isocyanatgruppe aus einem organischen Isocyanat entsteht, und zwar vorzugsweise jenem Isocyanat, welches Komponente (B) der erfindungsgemässen Emulsion darstellt.

Die neuen Emulgatoren der obigen Formel können durch Umsetzung von monofunktionellen Alkoholen der allgemeinen Formel $R\text{-}X-(CH_2\text{-}CH_2\text{-}O)_n-H$ mit Polyisocyanaten, die mindestens 2 Isocyanatgruppen enthalten, hergestellt werden, wobei mindestens eine Isocyanatgruppe je alkoholische OH-Gruppe eingesetzt wird. Die Reaktionsprodukte können dann in einem Überschuss an Polyisocyanat gelöst werden, um praxisgerechte, in Wasser emulgierbare Polyisocyanate zu erhalten.

Vorzugsweise wird jedoch bei der Umsetzung des obigen monofunktionellen Alkohols ein grosser Überschuss an Polyisocyanat angewandt, wobei die erfindungsgemäss bevorzugten Emulgatoren der allgemeinen Formel

$$R\text{-}X-(CH_2\text{-}CH_2\text{-}O)_n-CO\text{-}NH\text{-}Y$$

direkt in Form einer Lösung in überschüssigem Polyisocyanat entstehen.

Die monofunktionellen Alkohole der Formel $R\text{-}X-(CH_2\text{-}CH_2\text{-}O)_n-H$ werden in an sich bekannter Weise durch Ethoxylierung von Verbindungen der Formel R-X-H erhalten.

Bevorzugte Starter für die Ethoxylierungsreaktion sind beispielsweise:

N-Methylanilin
N-Ethylanilin
Cyclohexanol, gegebenenfalls am Ring substituiert
Phenol, gegebenenfalls am Ring substituiert
Thiophenol, gegebenenfalls am Ring substituiert
Glycidalkohol
3-Methyl-oxetan
3-Ethyloxetan
3-Butyl-oxetan
Furfurylalkohol
Tetrahydrofurfurylalkohol.

Besonders bevorzugte Strukturen R-X- in den monofunktionellen Polyethylenoxidderivaten der allgemeinen Formel $R\text{-}X-(CH_2\text{-}CH_2\text{-}O)_n-H$ sind:

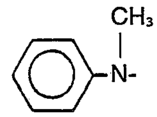

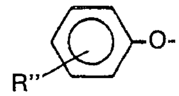

R'' = $CH_3$-, Halogen-, $O_2N$-

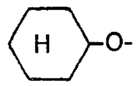

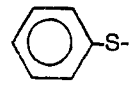

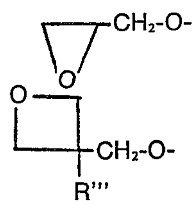

R''' = $CH_3$ oder $-C_2H_5$

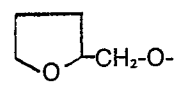

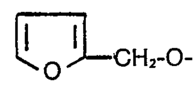

n in der allgemeinen Formel

$$-R\text{-}X-(CH_2\text{-}CH_2\text{-}O)_n-H$$

wird vorzugsweise so gewählt, dass ein Molekulargewicht von 500-2500 entsteht; ganz besonders bevorzugt ist ein Molgewichtsbereich von 700-2000. n stellt somit im Mittel eine Zahl zwischen 10 und 50 dar, besonders bevorzugt ist n = 15-40.

Die Alkohole der allgemeinen Formel $R\text{-}X-(CH_2\text{-}CH_2\text{-}O)_n-H$ werden wie oben beschrieben mit Polyisocyanaten, vorzugsweise im Überschuss, zu den erfindungsgemäss bevorzugten oberflächenaktiven Mitteln $R\text{-}X-(CH_2\text{-}CH_2\text{-}O)_n-CO\text{-}NH\text{-}Y$ umgesetzt, wobei R, X, n und Y die oben angegebene Bedeutung haben. Dabei entstehen, wenn das Polyisocyanat im Überschuss eingesetzt wurde, vorzugsweise Lösungen der oberflächenaktiven Mittel in Polyisocyanaten. Diese Lösungen sind im allgemeinen klar und lagerstabil, können jedoch naturgemäss gefärbt ein. Dies ist immer dann der Fall, wenn grosstechnische Rohprodukte als Polyisocyanate eingesetzt werden.

Die Umsetzung kann z.B. durch Zusetzen des monofunktionellen Alkohols der allgemeinen Formel $R\text{-}X-(CH_2\text{-}CH_2\text{-}O)_n-H$ zu dem Polyisocyanat unter Rühren erfolgen. Dabei ist es zweckmässig, die in vielen Fällen wachsartigen Alkohole vorher aufzuschmelzen. Die Reaktion läuft bei Verwendung der bevorzugten Polyphenyl - polymethylen - polyisocyanate schon bei Raumtemperatur ab. Sie kann jedoch selbstverständlich durch Erwärmen, z.B. auf Temperaturen von 50-100°C beschleunigt werden. In der Praxis haben sich Reaktionstemperaturen zwischen 50 und 80°C und Reaktionszeiten von 1 - 5 Stunden als bevorzugt erwiesen.

Als Isocyanatkomponente kommen bei der Herstellung der verschiedenen obengenannten Emulgatortypen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

$n = 2\text{-}4$, vorzugsweise 2,

und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 041 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Für die Herstellung der erfindungsgemäss gegebenenfalls mitzuverwendenden Emulgatoren kommen darüber hinaus auch endständige NCO-Gruppen aufweisende Präpolymere mit einem mittleren Molekulargewicht von ca. 300 bis 2000 in Betracht, wie sie in an sich bekannter Weise durch Umsetzung von höhermolekularen und/oder niedermolekularen Polyolen mit einem

Überschuss an Polyisocyanat erhalten werden. In diesem Zusammenhang geeignete höhermolekulare Polyole sind insbesondere zwei bis acht Hydroxylgruppen aufweisende Verbindungen, speziell solche vom Molekulargewicht 400 bis 10 000, vorzugsweise 800 bis 5000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst u./od. mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Geeignete niedermolekulare Polyole (Molekulargewicht 62 bis 400) sind z.B. die oben als

Ausgangskomponenten für die Herstellung der höhermolekularen Polyole genannten Verbindungen.

Zur Herstellung der erfindungsgemässen Emulsion werden das organische Polyisocyanat, die Sulfonsäure, das Wasser und gegebenenfalls der nichtionische, oberflächenaktive Emulgator vermischt. In einer bevorzugten Ausführungsform wird die Sulfonsäure und gegebenenfalls der Emulgator im Polyisocyanat vorgemischt, und nachfolgend die Emulgierung mit Wasser nach herkömmlicher Emulsionspraxis durchgeführt.

Selbstverständlich können in technischen Anlagen die Emulsionen auch durch Vermischen der Ausgangskomponenten in speziellen Mischaggregaten erzeugt werden, beispielsweise in statischen Mischern, Rührwerksmischköpfen, Dispergiermaschinen, ® Supraton-Aggregaten usw.

Als Isocyanatkomponente der erfindungsgemässen Emulsionen eignen sich alle oben im Zusammenhang mit der Emulgatorherstellung genannten Polyisocyanate, sofern sie bei den Verarbeitungstemperaturen, insbesondere bei Raumtemperatur, flüssig sind. Vorzugsweise sind die Isocyanatkomponenten identisch, da, wie oben erwähnt, der Emulgator direkt in situ im Polyisocyanat durch Eintragen des Ethylenoxidsequenzen tragenden Monoalkohols hergestellt wird.

Die erfindungsgemässen Emulsionen werden, wie schon erwähnt, vorzugsweise als Bindemittel für lignocellulosehaltige Werkstoffe eingesetzt. In diesem Zusammenhang haben sich vor allem Emulsionen bewährt, deren Isocyanatkomponente (siehe DE-OS 2 711 598) das Phosgenierungsprodukt der nicht destillierten Bodenfraktion ist, wie sie bei der Entfernung von 25 bis 90 Gew.-%, vorzugsweise 30 bis 85 Gew.-%, an 2,2'-, 2,4'- und/oder 4,4'-Diaminodiphenylmethan aus einem Anilin/Formaldehyd-Kondensat entsteht, oder die nicht destillierte Bodenfraktion ist, wie sie bei der Entfernung von 25 bis 90 Gew.-%, vorzugsweise 30 bis 85 Gew.-%, an 2,2'-, 2,4'- und/oder 4,4'-Diisocyanatodiphenylmethan aus dem rohen Phosgenierungsprodukt eines Anilin/Formaldehyd-Kondensats erhalten wurde, wobei die Isocyanatkomponente 35 bis 70 Gew.-%, vorzugsweise 45 bis 60 Gew.-%, an Diisocyanatodiphenylmethanen enthält, wobei der Gehalt an 2,4'-Diisocyanatodiphenylmethan zwischen 1 und 8 Gew.-%, vorzugsweise zwischen 2 und 5 Gew.-%, und der Gehalt an 2,2'-Diisocyanatodiphenylmethan zwischen 0 und 2 Gew.-% beträgt, und wobei die Isocyanatkomponente eine Viskosität bei 25°C von 50 bis 600 mPas, vorzugsweise 200 bis 500 mPas, und einen NCO-Gehalt zwischen 28 und 32 Gew.-% aufweist.

Wie aus dem oben Gesagten hervorgeht, werden derartige Bodenfraktionen beispielsweise bei der Entfernung von 45 bis 90 Gew.-%, vorzugsweise 55 bis 85 Gew.-%, an 4,4'-Diisocyanato-diphenylmethan aus einem rohen Diphenylmethandiisocyanat erhalten, welches mehr als 85 Gew.-%, vorzugsweise mehr als 90 Gew.-%, an 4,4'-Diisocyanatodiphenylmethan enthält bzw. werden aus einem Phosgenierungsprodukt eines Anilin/Formaldehyd-Kondensationsproduktes aus dem vorher eine entsprechende Menge 4,4'-Diaminodiphenylmethan abdestilliert worden ist, erhalten. Ein solches rohes Diphenylmethandiisocyanat ist beispielsweise nach dem Verfahren der DE-OS 2 356 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4-Diisocyanatodiphenylmethan und gegebenenfalls 4,4'- bzw. 2,2'-Diisocyanatodiphenylmethan abzudestillieren oder den vorgenannten entsprechende Mengen 2,4'- sowie gegebenenfalls 4,4'- bzw. 2,2'-Diaminodiphenylmethan Kondensationsprodukt abzudestillieren und dann zu phosgenieren. In jedem Fall kann dabei die Destillation so geführt werden, dass der Rückstand die oben angegebene Zusammensetzung aufweist.

Selbstverständlich ist es jedoch auch möglich (und in vielen Fällen in der Praxis auch einfacher), die gewünschte Isomeren- und Oligomerenzusammensetzung des Polyisocyanatgemisches durch Verschneiden verschiedener Bodenfraktionen zu erhalten.

Geeignete lignocellulosehaltige Rohstoffe, welche mit den erfindungsgemässen Emulsionen gebunden werden können, sind beispielsweise Holz, Rinde, Kork, Bagasse, Stroh, Flachs, Bambus, Alfagras, Reisschalen, Sissal- und Kokosfasern. Das Material kann dabei in Form von Granulaten, Spänen, Fasern oder Mehl vorliegen und einen Wassergehalt von z.B. 0 bis 35 Gew.-%, vorzugsweise von 5 bis 25 Gew.-%, aufweisen. Es wird mit dem erfindungsgemäss zu verwendenden Bindemittel in einer Menge von 1 bis 100, vorzugsweise 2 bis 12 Gew.-%, versetzt und — im allgemeinen unter Einwirkung von Druck und Hitze — zu Platten oder Formkörpern verpresst.

In analoger Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchenmittellagen, sogenannte Tischlerplatten, können erfindungsgemäss hergestellt werden, indem man die Furniere wie oben beschrieben mit der Polyisocyanatemulsion behandelt und anschliessend mit den Mittellagen — in der Regel bei erhöhter Temperatur und erhöhtem Druck — verpresst. Vorzugsweise werden dabei Temperaturen von 100-250°C, besonders bevorzugt 130-200°C, eingehalten. Der Anfangspressdruck liegt auch hier vorzugsweise zwischen 5 und 150 bar; im Laufe des Pressvorganges fällt dann der Druck meist bis gegen 0 ab.

Selbstverständlich können erfindungsgemäss jedoch auch aus anderen organischen (z.B.

Kunststoffabfälle aller Art) und/oder anorganischen Rohstoffen (z.B. Blähglimmer oder Silikatkugeln) Presskörper hergestellt werden.

Bei der Durchführung des erfindungsgemässen Verfahrens wird das zu bindende Material mit den erfindungsgemässen Emulsionen vermischt, und zwar zweckmässig durch feines Besprühen mit der wässrigen Emulsion, um so eine möglichst homogene Verteilung des Bindemittels zu erreichen.

Anschliessend wird unter den oben angegebenen Bedingungen heiss verpresst, ohne dass nachfolgend Schwierigkeiten bei der Entformung der Presskörper auftreten. Der erfindungswesentliche Punkt ist daher vorrangig im Selbsttrennvermögen der erfindungsgemässen wässrigen Emulsionen zu sehen. Für diese überraschende Wirkung steht im Augenblick noch keine plausible Erklärung zur Verfügung.

Erfindungsgemäss können die Polyiocyanatemulsionen auch in Kombination mit den oben beschriebenen Polyhydroxylverbindungen in einem NCO/OH-Verhältnis zwischen 1:2 und 10:1, vorzugsweise 1,5:1 bis 1:1, eingesetzt werden. Es ist dabei möglich, die beiden Komponenten getrennt oder als reaktives Gemisch einzusetzen. Praktische Bedeutung haben derartige Kombinationen von Polyisocyanat und Polyhydroxylverbindungen als Bindemittel z.B. bei der Bindung von Korkschrot. Es ist auch möglich, an sich bekannte Treibmittel in einer Menge von ca. 0,5 bis 30 Gew.-%, bezogen auf Binde- oder Imprägniermittel, und/oder andere die Schaumbildung oder die chemische Reaktion zwischen Polyisocyanaten, lignocellulosehaltigem Material und gegebenenfalls Polyhydroxylverbindung beeinflussende Additive wie Stabilisatoren, Katalysatoren und Aktivatoren in einer Menge von 0,05 bis 10 Gew.-%, bezogen auf Binde- bzw. Imprägniermittel, zuzusetzen.

Die erfindungsgemäss als Bindemittel zu verwendenden Polyisocyanatemulsionen können auch mit den in der Holzwerkstoffindustrie bisher überwiegend eingesetzten wässrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermittel, wei z.B. auf Basis PVAC-Latex, Sulfitlauge oder Tannin, wobei ein Mischungsverhältnis der erfindungsgemässen mit diesen zusätzlichen Bindemitteln zwischen 1:20 und 20:1, vorzugsweise zwischen 1:5 und 5:1, eingehalten werden kann und wobei man die Polyisocyanatemulsionen und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äusseren Schichten mit den erfindungsgemäss zu verwendenden Polyisocyanatemulsionen (allein oder gemeinsam mit konventionellen Klebstoffen) und eine oder mehrere innere Schichten mit konventionellen Klebstoffen (allein oder gemeinsam mit der Polyisocyanatemulsion) versetzen und anschliessend miteinander verpressen.

Infolge ihrer hervorragenden mechanischen Eigenschaften eignen sich die erfindungsgemäss hergestellten Platten oder Formteile auf Basis von lignocellulosehaltigen oder anderen organischen und/oder anorganischen Rohstoffen vor allem für eine Verwendung im Bauwesen. Um den Platten oder Formteilen die hierfür im allgemeinen erforderliche Beständigkeit gegen Pilzbefall, Insektenfrass oder Feuereinwirkung zu verleihen, kann man den Bindemitteln die handelsüblichen organischen oder anorganischen Schutzmittel, in reiner Form oder als Lösung in einer Menge von ca. 0,05 bis 30 Gew.-%, vorzugsweise 0,5 bis 20 Gew.-%, bezogen auf lignocellulosehaltige Rohstoffe, zusetzen. Als Lösungsmittel kommen in Frage: Wasser oder organische Lösungsmittel z.B. Rückstandsöle aus der Erdölaufarbeitung, Chlorkohlenwasserstoffe u.a.; die Verleimungsqualität wird hierdurch im allgemeinen nicht beeinträchtigt. Im Gegensatz zu Phenol/Formaldehyd-Harz-verleimten Platten treten bei den erfindungsgemäss hergestellten Werkstoffen dabei vorteilhafterweise weder Salzausblühungen noch «Ausbluten» ein.

Mit den erfindungsgemäss zu verwendenden Isocyanatemulsionen können im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen und toxikologischen Eigenschaften der Platten als auch in verfahrenstechnischer Hinsicht, erzielt werden.

So ist es im Falle von Holzspanplatten möglich, entweder bei gleicher Bindemittelmenge wie bei Phenol/Formaldehyd- bzw. Harnstoff/Formaldehyd-Harzen eine um bis zu 50% erhöhte Biegesteifigkeit (neben einer Verbesserung anderer mechanischer Eigenschaften) oder aber bei einer um etwa 25 bis 70% erniedrigten Bindemittelkonzentration ein gleiches mechanisches Eigenschaftsbild zu erreichen. Darüber hinaus geben diese Platten weder Formaldehyd noch sonstige gesundheitsschädliche Gase ab. Diese optimalen Werkstoffeigenschaften werden insbesondere dann erzielt, wenn als Bindemittel ein Polyphenyl-Polymethylen-Polyisocyanat mit der oben näher definierten Viskosität und Isomerenverteilung eingesetzt wird.

Es ist hierbei ohne Einfluss, ob das Polyisocyanatgemisch durch Abdestillieren von 2,4'- und/oder 4,4'-Diisocyanatodiphenylmethan aus rohem Diphenylmethandiisocyanat oder analog durch Abtrennen von reinem Diaminodiphenylmethan aus rohem Diaminodiphenylmethan und anschliessende Phosgenierung der so erhaltenen nicht destillierten Bodenfraktion aus Polyarylaminen hergestellt wurde.

Enthält das Polyisocyanat mehr als 75 Gew.-% an Diisocyanatodiphenylmethanen, so wird das physikalische Werteniveau der Spanplatte

wesentlich verschlechtert. Sinkt andererseits der Gehalt an Diisocyanatodiphenylmethanen auf unter 35 Gew.-%, so wird im allgemeinen das Bindemittel bei Raumtemperatur zu hochviskos und lässt sich schlecht emulgieren.

Die folgenden Beispiele erläutern die Erfindung. Wenn nicht anders vermerkt, sind Zahlenangaben als Gewichtsteile bzw. Gewichtsprozente zu verstehen.

In den Beispielen wurden die folgenden Ausgangsprodukte eingesetzt:

Polyisocyanat I:
Vom rohen Phosgenierungsprodukt eines Anilin/Formaldehyd-Kondensats wird soviel Diisocyanatodiphenylmethan abdestilliert, dass der Destillationsrückstand bei 25°C eine Viskosität von 200 Pa·s aufweist. (2-Kernanteil: 44,3%; 3-Kernanteil: 23,5%; Anteil an höherkernigen Polyisocyanaten: 32,2%).

Polyisocyanat II:
Analog hergestelltes Polyisocyanat mit einer Viskosität von 300 Pa·s/25°C. 2-Kernanteil: 60%; NCO-Gehalt: 30%.

Emulgator 1
Ethoxyliertes n-Butanol (mittleres Molekulargewicht: 1200).

Emulgator 2
Ethoxyliertes N-Methylanilin (mittleres Molekulargewicht: 1000).

Emulgator 3
Ethoxyliertes 3-Ethyl-3-hydroxymethyloxetan (mittleres Molekulargewicht: 1191).

Sulfonsäure
Technische Alkylbenzolsulfonsäure MARLON® $AS_3$ (Handelsprodukt der Firma Chemische Werke Hüls AG, BRD) mit folgender Komponentenverteilung:

$C_{10}$ : ca. 5 %
$C_{11}$ : ca. 45 - 50 %
$C_{12}$ : ca. 35 - 40 %
$C_{13}$ : ca. 10 - 15 %
$C_{14}$ : ca. 1 %

Beispiel 1
436 g einer kontinuierlich mittels Rührwerksmischkopf hergestellten Emulsion, bestehend aus 218 g Wasser, 192 g Polyisocyanat, 11 g Emulgator 1 und 15 g Sulfonsäure, werden mit 2800 g eines industriell hergestellten Nadelholz/Laubholz-Spangemisches mit einem Feuchtigkeitsgehalt von 2% vermischt. Aus dem Material wird auf einem unbehandelten Zulageblech ein Formling gebildet, der bei einer Heizplattentemperatur von 170°C und einem Anfangsdruck von 25 bar 2 Minuten lang gepresst wird.

Man erhält eine Spanplatte, die sich nach Öffnen der Presse sofort einwandfrei von Zulageblech und Heizplatte ablöst und ausgezeichnete mechanische Eigenschaften aufweist.

Eine zum Vergleich nach obigem Verfahren, jedoch ohne Mitverwendung von Sulfonsäure hergestellte Spanplatte, zeigt zu Zulageblech und Heizplatte starke Haftung.

Beispiel 2
1410 g einer kontinuierlich mittels HK-Mischkopf hergestellten Emulsion, bestehend aus 940 g Wasser, 420 g Polyisocyanat I, 25 g Emulgator 2 und 25 g Sulfonsäure werden mit 12000 g industriell aufbereiteter Zuckerrohr-Bagasse mit einem Feuchtigkeitsgehalt von 2% vermischt. In einer Stahlform wird aus dem Material unter Druck und Hitze eine Transportpalette hergestellt, die sich nach dem Öffnen der Presse leicht entnehmen lässt und in ihren mechanischen Eigenschaften gegenüber einer mit konventionellem Harnstoff/Formaldehyd-Harz verleimten Palette deutlich überlegen ist.

Beispiel 3
2900 g eines industriell hergestellten Spänegemisches mit einem Feuchtigkeitsgehalt von 6% werden mit 242 g einer 45%igen wässrigen Phenol/Formaldehyd-Harzlösung und einer im Becherglas mit Holzrührstab hergestellten Emulsion, bestehend aus 30 g Wasser, 55 g 50%iger wässriger Paraffindispersion (®Mobilar 161 der Firma Mobil Oil AG), 105 g Polyisocyanat II, 5 g Emulgator 3 und 4 g Sulfonsäure vermischt.

Aus dem Material wird auf einem unbehandelten Zulageblech ein Formling gebildet, der bei einer Heizplattentemperatur von 170°C und einem Anfangsdruck von 25 bar 2 Minuten lang gepresst wird. Man erhält eine Spanplatte, die sich nach dem Öffnen der Presse sofort einwandfrei von Zulageblech und Heizplatte ablöst und ausgezeichnete mechanische Eigenschaften aufweist.

## Patentansprüche

1. Emulsionen, enthaltend

A) 80 - 20 Gew.-%, bezogen auf gesamte Emulsion, an Wasser,

B) 18 - 79 Gew.-%, bezogen auf gesamte Emulsion, eines organischen Polyisocyanats und gegebenenfalls

C) 1 - 10 Gew.-%, bezogen auf Polyisocyanat, eines nichtionischen, oberflächenaktiven Mittels als Emulgator,

dadurch gekennzeichnet, dass sie

D) 0,5 - 5 Gew.-%, bezogen auf gesamte Emulsion, einer Sulfonsäure der allgemeinen Formel

$$R_1-(SO_3H)_n$$

enthalten, in welcher

n für die ganzen Zahlen 1 oder 2 steht und

$R_1$ einen aromatischen Kohlenwasserstoffrest mit 6-14 Kohlenstoffatomen, einen aliphatischen Kohlenwasserstoffrest mit 10-18 Kohlenstoffatomen, einen cycloaliphatischen Kohlenwasserstoffrest mit 6-15 Kohlenstoffatomen, einen araliphatischen Kohlenwasserstoffrest mit 7-15 Kohlenstoffatomen oder einen alkaromatischen Kohlenwasserstoffrest mit 7-24 Kohlenstoffatomen

bedeutet.

2. Emulsion nach Anspruch 1, dadurch gekennzeichnet, dass sie eine Sulfonsäure der angegebenen Formel enthält, in welcher

n = 1 und

$R_1$ einen alkylsubstituierten Phenylrest mit 9 bis 20 C-Atomen bedeutet.

3. Emulsion nach Anspruch 1 und 2, dadurch gekennzeichnet, dass Komponente B) das Phosgenierungsprodukt der nicht destillierten Bodenfraktion ist, wie sie bei der Entfernung von 25 bis 90 Gew.-% an 2,2'-, 2,4'- und/oder 4,4'-Diaminodiphenylmethan aus einem Anilin/Formaldehyd-Kondensat entsteht, oder die nicht destillierte Bodenfraktion ist, wie sie bei der Entfernung von 25 bis 90 Gew.-% an 2,2'-, 2,4'- und/ oder 4,4'-Diisocyanatodiphenylmethan aus dem rohen Phosgenierungsprodukt eines Anilin/ Formaldehyd-Kondensats erhalten wurde, wobei Komponente B) insgesamt 35 bis 70 Gew.-% an Diisocyanatodiphenylmethanen, davon 1 bis 8 Gew.-% 2,4'-Diisocyanatodiphenylmethan und 0 bis 2 Gew.-% an 2,2'-Diisocyanatodiphenylmethan, enthält, eine Viskosität bei 25°C von 50 bis 600 mPas und einen NCO-Gehalt zwischen 28 und 32 Gew.-% aufweist.

4. Emulsion nach Anspruch 3, dadurch gekennzeichnet, dass Komponente B) ein Polyisocyanat ist, welches durch Abdestillieren von 45 bis 90 Gew.-% 4,4'-Diphenylmethandiisocyanat aus einem rohen Diphenylmethandiisocyanat mit einem Gehalt von mehr als 85 Gew.-% an 4,4'-Diphenylmethandiisocyanat als Bodenfraktion erhalten wurde oder welches durch Phosgenierung der nicht destillierten Bodenfraktion hergestellt wurde, wie sie beim Abdestillieren von 45 bis 90 Gew.-% an 4,4'-Diaminodiphenylmethan aus rohem Diaminodiphenylmethan mit einem Gehalt von mehr als 85 Gew.-% an 4,4'-Diaminodiphenylmethan entsteht.

5. Emulsion nach Anspruch 3, dadurch gekennzeichnet, dass Komponente B) ein Polyisocyanat ist, welches durch Abdestillieren von 25 bis 80 Gew.-% an 2,4'- und gegebenenfalls 4,4'- bzw. 2,2'-Diisocyanatodiphenylmethan aus rohem Diphenylmethandiisocyanat mit einem Gehalt an Diisocyanatodiphenylmethanisomeren von 60 bis 90 Gew.-%, welches 20 bis 60 Gew.-% an 2,4'-Isomerem enthält, als Bodenfraktion erhalten wurde oder welches durch Phosgenierung der nicht destillierten Bodenfraktion hergestellt wurde, wie sie beim Abdestillieren von 25 bis 80 Gew.-% an 2,4'- und gegebenenfalls 4,4'- bzw. 2,2'-Diaminodiphenylmethan aus rohem Diaminodiphenylmethan entsteht, welches 20 bis 60 Gew.-% an 2,4'-Diaminodiphenylmethan enthält.

6. Verfahren zur Herstellung von Formkörpern durch Heissverpressen einer Masse aus einem zerkleinerten organischen und/oder anorganischen Rohstoff unter Verwendung einer wässrigen Emulsion einer Isocyanatgruppen aufweisenden Verbindung als Bindemittel sowie gegebenenfalls zusätzlich weiteren Bindemitteln, dadurch gekennzeichnet, dass als Bindemittel die Emulsionen nach Anspruch 1 bis 5 eingesetzt werden.

**Claims**

1. Emulsions containing:

A) from 80 to 20% by weight, based on the total emulsion, of water.

B) from 18 to 79% by weight, based on the total emulsion, of an organic polyisocyanate and optionally

C) from 1 to 10% by weight, based on the polyisocyanate, of a non-ionic, surface-active agent as an emulsifier,

characterised in that they contain:

D) from 0.5 to 5% by weight, based on the total emulsion, of a sulphonic acid corresponding to the following general formula:

$$R_1-(SO_3H)_n$$

wherein

n represents the integers 1 or 2 and

$R_1$ represents an aromatic hydrocarbon radical containing from 6 to 14 carbon atoms, an aliphatic hydrocarbon radical containing from 10 to 18 carbon atoms, a cycloaliphatic hydrocarbon radical containing from 6 to 15 carbon atoms, an araliphatic hydrocarbon radical containing from 7 to 15 carbon atoms or an alkaromatic hydrocarbon radical containing from 7 to 24 carbon atoms.

2. An emulsion according to claim 1, characterised in that it contains a sulphonic acid corresponding to the given formula in which

n represents 1 and

$R_1$ represents an alkyl-substituted phenyl radical containing from 9 to 20 carbon atoms.

3. An emulsion according to claims 1 and 2, characterised in that component B) is the phosgenation product of the undistilled bottom fraction of the type produced during the removal of from 25 to 90% by weight of 2,2'-, 2,4'-, and/ or 4,4'-diaminodiphenylmethane from an aniline/ formaldehyde condensate, or the undistilled bottom fraction of the type obtained during the removal of from 25 to 90% by weight of 2,2'-, 2,4'- and/or 4,4'-diisocyanatodiphenylmethane from the crude phosgenation product of an aniline/formaldehyde condensate, wherein component B) contains a total of from 35 to 70% by weight of diisocyanatodiphenylmethanes, of which from 1 to 8% by weight are 2,4'-diisocyanatodiphenylmethane and from 0 to 2% by weight are 2,2'-diisocyanatodiphenylmethane, and has a viscosity at 25°C of from 50 to 600 mPas and an NCO content of between 28 and 32% by weight.

4. An emulsion according to claim 3, characterised in that component B) is a polyisocyanate which has been obtained by the distillation of from 45 to 90% by weight of 4,4'-diphenylmethane diisocyanate from a crude diphenylmethane diisocyanate containing more than 85% by weight of 4,4'-diphenylmethane diisocyanate as the bottom fraction or which has been produced by phosgenation of the undistilled bottom fraction of the type formed during distillation of from 45 to 90% by weight of 4,4'-diaminodiphenyl methane from crude diaminodiphenylmethane, containing more than 85% by weight of 4,4'-diaminodiphenylmethane.

5. An emulsion according to claim 3, characterised in that component B) is a polyisocyanate which has been obtained by the distillation of from 25 to 80% by weight of 2,4'- and optionally 4,4'- or 2,2'-diisocyanatodiphenylmethane from crude diphenylmethane diisocyanate having a content of diisocyanatodiphenylmethane isomers of from 60 to 90% by weight, containing from 20 to 60% by weight of 2,4' isomers, as the bottom fraction or which has been produced by phosgenation of the undistilled bottom fraction of the type formed during distillation of from 25 to 80% by weight of 2,4- and optionally 4,4'- or 2,2'-diaminodiphenylmethane from crude diaminodiphenylmethane, containing from 20 to 60% by weight of 2,4'-diaminodiphenylmethane.

6. A process for the production of shaped articles by hot pressing of a composition of a comminuted organic and/or inorganic raw material using an aqueous emulsion of a compound containing isocyanate groups as a binder as well as optionally additional further binders, characterised in that the emulsions according to claims 1 to 5 are used as binder.

**Revendications**

1. Emulsions contenant

A) 80 à 20% en poids, par rapport à l'émulsion totale, d'eau,

B) 18 à 79% en poids, par rapport à l'émulsion totale, d'un polyisocyanate organique et, le cas échéant,

C) 1 à 10% en poids, par rapport au polyisocyanate, d'un agent tensio-actif non ionique comme émulsionnant,

caractérisées en ce qu'elles renferment

D) 0 à 5% en poids, par rapport à l'émulsion totale, d'un acide sulfonique de formule générale:

$$R_1-(SO_3H)_n$$

dans laquelle

n représente les nombres entiers 1 ou 2 et

$R_1$ est un reste d'hydrocarbure aromatique ayant 6 à 14 atomes de carbone, un reste d'hydrocarbure aliphatique ayant 10 à 18 atomes de carbone, un reste d'hydrocarbure cycloaliphatique ayant 6 à 15 atomes de carbone, un reste d'hydrocarbure araliphatique ayant 7 à 15 atomes de carbone ou un reste d'hydrocarbure alkaromatique ayant 7 à 24 atomes de carbone.

2. Emulsion suivant la revendication 1, caractérisée en ce qu'elle contient un acide sulfonique de la formule indiquée,

dans laquelle

n est égal à 1 et

$R_1$ est un reste phényle à substituant alkyle, ayant 9 à 20 atomes de carbone.

3. Emulsion suivant les revendications 1 et 2, caractérisée en ce que le composant B) et le produit de phosgénation de la fraction de queue non distillée qui est produite dans l'élimination de 25 à 90% en poids de 2,2'-, 2,4'- et/ou 4,4'-diaminodiphénylméthane d'un produit de condensation aniline/formaldéhyde ou la fraction de queue non distillée qui est obtenue dans l'élimination de 25 à 90% en poids de 2,2'-, 2,4'- et 4,4'-diisocyanatodiphénylméthane du produit brut de phosgénation d'un produit de condensation aniline/formaldéhyde, le composant B) contenant au total 35 à 70% en poids de diisocyanatodiphénylméthanes dont 1 à 8% en poids de 2,4'-diisocyanatodiphénylméthane et 0 à 2% en poids de 2,2'-diisocyanatodiphénylméthane, ayant une viscosité à 25°C de 50 à 600 mPa.s et une teneur en NCO comprise entre 28 et 32% en poids.

4. Emulsion suivant la revendication 3, caractérisée en ce que le composant B) est un polyisocyanate qui a été obtenu comme fraction de queue dans l'élimination par distillation de 45 à 90% en poids de 4,4'-diphénylméthane-diisocyanate d'un diphénylméthane-diisocyanate brut contenant plus de 85% en poids de 4,4'-diphénylméthane-diisocyanate ou qui a été préparé par phosgénation de la fraction de queue non distillée qui est formée lors de l'élimination par distillation de 45 à 90% en poids de 4,4'-diaminodiphénylméthane d'un diaminodiphénylméthane brut ayant une teneur en 4,4'-diaminodiphénylméthane de plus de 85% en poids.

5. Emulsion suivant la revendication 3, caractérisée en ce que le composant B) est un polyisocyanate qui a été obtenu comme fraction de queue par élimination par distillation de 25 à 80% en poids de 2,4'- et, le cas échéant, de 4,4'- ou de 2,2'-diisocyanatodiphénylméthane d'un diphénylméthane-diisocyanate brut ayant une teneur en isomères de diisocyanatodiphénylméthane de 60 à 90% en poids, qui contient 20 à 60% en poids d'isomère 2,4', ou qui a été préparé par phosgénation de la fraction de queue non distillée qui est formée dans l'élimination par distillation de 25 à 80% en poids de 2,4'- et, le cas échéant, de 4,4'- ou de 2,2'-diaminodiphénylméthane d'un diaminodiphénylméthane brut qui contient 20 à 60% en poids de 2,4'-diaminodiphénylméthane.

6. Procédé de production de pièces moulées par compression à chaud d'une masse formée d'une matière organique et/ou inorganique subdivisée, avec utilisation d'une émulsion aqueuse d'un composé porteur de groupes isocyanate comme liant ainsi que, le cas échéant, d'autres liants additionnels, caractérisé en ce qu'on utilise comme liant les émulsions selon les revendications 1 à 5.